**Europäisches Patentamt**

**European Patent Office**

**Office européen des brevets**

(11) Veröffentlichungsnummer: **0 215 973**
**A1**

# EUROPÄISCHE PATENTANMELDUNG

(21) Anmeldenummer: 85112121.0

(22) Anmeldetag: 25.09.85

(51) Int. Cl.⁴: **G02B 6/36**

(43) Veröffentlichungstag der Anmeldung:
**01.04.87 Patentblatt 87/14**

(84) Benannte Vertragsstaaten:
**AT BE CH DE FR GB IT LI LU NL SE**

(71) Anmelder: **Schleifring und Apparatebau GmbH**
**Am Hardtanger 10**
**D-8080 Fürstenfeldbruck(DE)**

(72) Erfinder: **Mainka, Joachim**
**Friedrich-Ebert-Strasse 5**
**D-8080 Fürstenfeldbruck(DE)**

(74) Vertreter: **Patentanwälte Beetz sen. - Beetz jun. Timpe - Siegfried - Schmitt-Fumian**
**Steinsdorfstrasse 10**
**D-8000 München 22(DE)**

(54) **Vorrichtung zur Übertragung von Lichtsignalen zwischen zwei relativ verdrehbaren Bauteilen.**

(57) Gegenstand der Erfindung ist eine Vorrichtung zur Übertragung von Lichtsignalen zwischen zwei Bauteilen, von denen mindestens eines um die gemeinsame Achse rotiert. Diese Vorrichtung besteht aus einem Stator (1), einem mit dem rotierenden Bauteil gekuppelten Rotor (2), aus jeweils mehreren Lichtwellenleiter-Anschlüssen im Stator und im Rotor sowie aus einem zentralen optischen System. Gemäß einer ersten Lösung enthält das optische System zwei gleichachsig und mit einem der Summe der Brennweiten (f1 + f2) entsprechenden Bildpunktabstand angeordneten Sammellinsen (H1, H2). Hierbei sind die Enden der Lichtwellenleiter (a, b, c) auf der Sender-und der Empfängerseite im Stator (1) bzw. im Rotor (2) in der optischen Achse in vorgegebenen axialen Bildpunktabständen festgelegt. Eine weitere Lösung zeichnet sich dadurch aus, daß das optische System zwei Zylinderlinsen (20, 21) enthält, die mit ihren Planflächen achsparallel zueinander ausgerichtet quer zur optischen Achse - (OA) in einem der Summe ihrer Brennweiten (f1, f2) entsprechenden Abstand angeordnet und gemeinsam mit der halben Rotordrehzahl angetrieben sind.

FIG. 2

FIG. 4

# Vorrichtung zur Übertragung von Lichtsignalen zwischen zwei relativ verdrehbaren Bauteilen

Die Erfindung betrifft eine Vorrichtung zur Übertragung von Lichtsignalen zwischen zwei Bauteilen, von denen mindestens eines um die gemeinsame Achse rotiert, bestehend aus einem Stator, aus einem mit dem rotierenden Bauteil gekuppelten Rotor, aus jeweils mehreren Lichtwellenleiter-Anschlüssen im Stator und im Rotor und aus einem zentral angeordneten optischen System.

Eine derartige Vorrichtung gehört bereits zum - nicht vorveröffentlichen - Stand der Technik (DE-Patentanmeldung P 34 11 121.2). Zur Einkanal-Übertragung enthält die Optik dieser Vorrichtung je ein mehrlinsiges Objektiv im Rotor und im Stator, deren Brennpunkte in der Eingangsebene des zugeordneten, in der Drehachse angeschlossenen Lichtwellenleiters liegen. Statt der beiden mehrlinsigen Objektive können auch zwei Hohlspiegel mit Zentralöffnung verwendet werden, die mit ihren Bogenflächen nach außen weisend im Strahlengang angeordnet sind. Die Brennweiten sind ineinander verschachtelt und die Brennpunkte liegen jeweils in der Eingangs-bzw. Ausgangsebene des einen bzw. des anderen Lichtwellenleiters. An diese konstruktiv einfache Vorrichtung kann jedoch nur ein einziger Signalkanal zentral angeschlossen werden.

Zur Mehrkanalübertragung wird in der o. g. Patentanmeldung eine Vorrichtung vorgeschlagen, deren Optik ein optisches Wendeelement, z. B. in Form eines Prismas, aufweist, das in der optischen Achse zwischen dem Rotor und dem Stator angeordnet ist und mit der halben Drehzahl bzw. Winkelgeschwindigkeit des Rotors umläuft. An den äußeren Stirnseiten des Rotors und des Stators können mehrere Leiter unter Verwendung besonderer Anschlußbuchsen angeschlossen werden, wobei die den in bestimmter Ordnung positionierten Leiterbündeln zugeführten Lichtsignale durch die Wirkung des optischen Wendeelementes und dessen Rotation mit halber Drehzahl an die in der gleichen relativen Lage positionierten ausgangsseitigen Lichtleiter (Glasfasern) übertragen werden. Nachteilig bei der erstgenannten Vorrichtung ist die nur auf einen Kanal beschränkte Übertragungsmöglichkeit und bei der zweiten Ausführung der relativ hohe konstruktive und herstellungstechnische Aufwand, der durch die Lagerung und den Antrieb des mit halber Rotor-Drehzahl umlaufenden optischen Wendeelementes verursacht wird.

Aus der DE-PS 32 49 621 ist eine Vorrichtung zur Mehrkanal-Übertragung von Lichtsignalen zwischen zwei relativ um eine gemeinsame Achse umlaufenden Bauteilen bekannt, bei der die Lichtsignale der einzelnen Sender bzw. Glasfasern individuell auf zugeordnete Empfänger über eine zentrale Konvexlinse übertragen werden. Diese Konvexlinse ist als Stufenlinse ausgebildet und weist mehrere Ringzonen unterschiedlicher Brennweite auf. Die Lichtempfänger können in der optischen Achse angeordnet sein, wohingegen die Lichtsender radial außerhalb dieser optischen Achse liegen und ihre Lichtbündel über gesonderte Sammellinsen auf die unterschiedlichen Ringzonen der Stufenlinse gerichtet sind. Ein wesentlicher Nachteil dieses bekannten Drehkopplers liegt darin, daß die Brennweiten der dezentralen ringförmigen Bereiche der Konvexlinse bezüglich der den Sendern zugeordneten Sammellinsen in einem wachsenden Verhältnis stehen, was zur Folge hat, daß in diesem Verhältnis vergrößerte Flächen abgebildet werden, so daß das entsprechende Strahlenbündel mit in diesem Verhältnis verringerter Intensität empfangen wird. Darüber hinaus muß der Einfallwinkel der in der Achse zurückversetzten Empfänger für die Lichtbündelstrahlen der außermittigen Sender ausreichend groß gewählt werden, damit die Lichtbündelstrahlen unter Berücksichtigung des Aperturwinkels überhaupt einfallen können. Diese großen Winkel haben zur Voraussetzung, daß nur sog. Stufenindex-Fasern verwendet werden können deren Öffnungswinkel ca. 34° (entsprechend einer numerischen Apertur von 0,3) beträgt. Der Nachteil dieser Stufenindex-Fasern liegt in den begrenzten Übertragungslängen insbesondere bei hohen Frequenzen. Die hinsichtlich der Übertragung günstigeren Gradienten-Fasern können nicht eingesetzt werden, da ihr Öffnungswinkel nur ca. 23° (entsprechend einer numerischen Apertur von 0,2) beträgt. Durch diesen Nachteil wird die Anzahl der praktisch übertragbaren Signalkanäle auf 2 bis 3 beschränkt.

Aufgabe der Erfindung ist es, eine Vorrichtung zur Mehrkanal-Übertragung von Lichtsignalen zwischen zwei relativ zueinander umlaufenden Bauteilen zu schaffen, die bei konstruktiv einfachem Aufbau verbesserte optische Übertragungs-Eigenschaften besitzt.

Diese Aufgabe wird durch die kennzeichnenden Merkmale des Patentanspruchs 1 gelöst.

Die besonderen Vorteile der erfindungsgemäßen Vorrichtung liegen darin, daß die Abstrahlwinkel der Sender-Fasern gleich den Einfallwinkeln der Empfänger-Fasern sind und sich die Sender-sowie die Empfänger-Flächen stets im Verhältnis 1 : 1 verhalten. Dies wird durch die sog. telezentrische Abbildung erreicht, bei der die inneren Brennpunkte F1', F2 zusammenfallen, wobei in diesem Fall die intravokalen Bildorte der Stator-Lichtwellenleiter den extravokalen Bildorten der Rotor-Lichtwellenleiter abstandsmäßig entsprechen -und umgekehrt.

Im folgenden werden Ausführungsbeispiele der Erfindung anhand der Zeichnung im einzelnen beschrieben. Es zeigen:

Fig. 1 schematisch das Übertragungsprinzip,

Fig. 2 eine Vorrichtung zur Dreikanal-Übertragung im Axialschnitt,

Fig. 3 das Funktionsprinzip einer anderen Vorrichtung,

Fig. 4 einen Axialschnitt der anderen Vorrichtung.

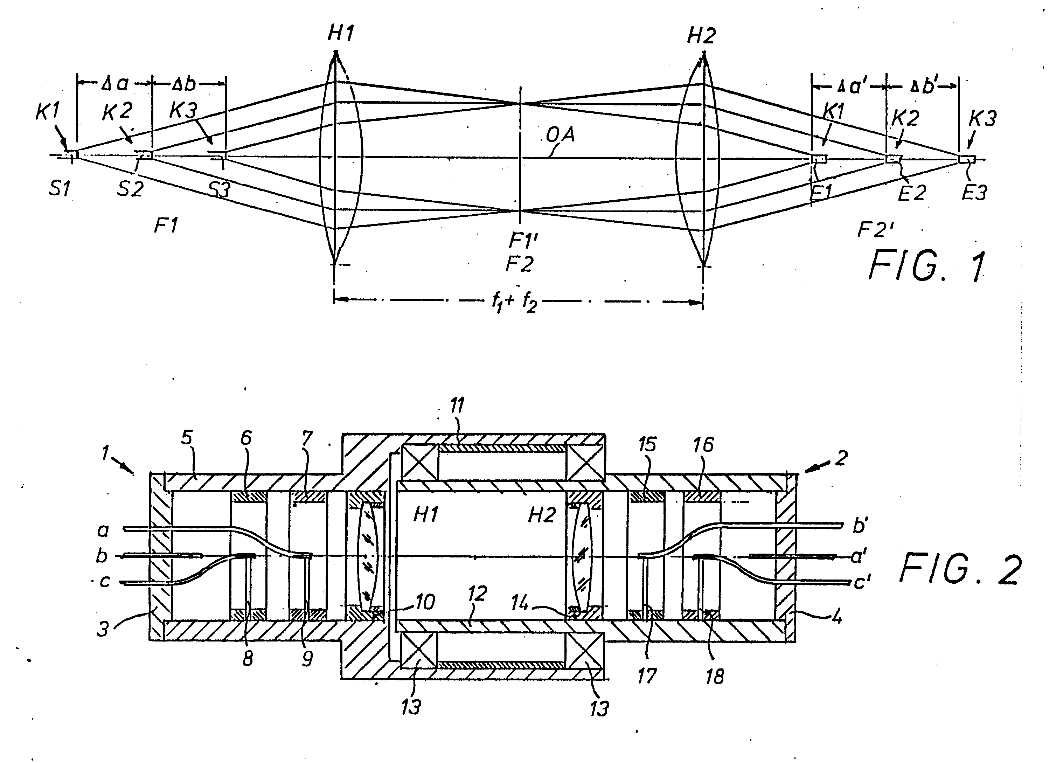

Entsprechend Fig. 1 können Lichtsignale in drei Kanäle K1, K2, K3 mit jeweils einer Sendeeinheit S1, S2, S3 und je einer Empfängereinheit E1, E2, E3 übertragen werden. Die Bildorte aller Sender-und Empfängereinheiten sind in der optischen Achse OA hintereinander mit vorgegebenen Zwischenabständen Δa, Δb bzw. Δa', Δb' angeordnet, wobei die Zwischenabstände Δa, Δa' sowie Δb, Δb' gleich sind. Im mittleren Bereich zwischen den Sender-und Empfängereinheiten befinden sich zwei Objektive -hier in Form von Sammellinsen H1, H2 -, deren Form und Anordnung so gewählt ist, daß ihre Brennpunkte F1', F2 in der Mittelebene sowie in den jeweiligen Ausgangs-bzw. Eingangsebenen der Sender-und Empfangseinheiten liegen. Es sind auch andere Ausführungen möglich, bei denen die Brennpunkte zwar zusammenfallen, jedoch nicht in der Mittelebene liegen, wobei in diesem Fall die beiden Brennweiten f1, f2 ungleich sind. Die Linsen H1, H2 ergeben durch ihre gewählte Form und Anordnung den in Fig. 1 dargestellten Strahlengang, wobei z. B. das Strahlenbündel der von der zugeordneten Sammellinse H1 am weitesten abliegenden Sendereinheit S1 von der der zweiten Sammellinse H2 am nächsten liegenden Empfängereinheit E1 empfangen wird. Entsprechendes gilt für die weiteren Sendereinheiten S2, S3 und die ihnen zugeordneten Empfängereinheiten E2, E3.

Die in Fig. 2 dargestellte Vorrichtung besteht aus einem hohlzylindrischen Stator 1 und aus einem hohlzylindrischen Rotor 2. Der Stator 1 ebenso wie der Rotor 2 sind gleichachsig angeordnet und nach außen durch je eine Stirnplatte 3, 4 abgeschlossen. In jeder dieser Stirnplatten 3 und 4 sind je drei Lichtwellenleiter unter gegenseitigem seitlichem Abstand festgelegt. Jeder dieser Lichtwellenleiter ist durch eine einzelne oder aber ein Bündel von Glasfasern gebildet. In Übereinstimmung mit der Schemadarstellung in Fig. 1 stellen die Lichtwellenleiter im Stator die Sendereinheiten S1, S2, S3 dar und sind demzufolge auch so in einem hohlzylindrischen Ansatz des Stators angeordnet, daß ihre Enden unter axialen Zwischenabständen

Δa, Δb in der optischen Achse der Vorrichtung liegen. Der die Sendereinheit S1 darstellende mittlere Lichtwellenleiter b ist in der Endplatte 3 des Stators 1 festgelegt. Zur Fixierung der die Sendereinheiten S1 bzw. S3 darstellenden Lichtwellenleiter a und b sind im zylindrischen Ansatz 5 des Stators 1 Halteringe 6, 7 befestigt, die über radiale Stege 8, 9 die Endabschnitte der beiden Lichtwellenleiter a, c haltern. In der optischen Achse befindet sich ferner die Linse H1, die mittels eines Ringes 10 im Stator 1 in dem durch optische Kriterien festgelegten Abstand zu den Enden der Lichtwellenleiter a bis c festgelegt ist. In den erweiterten hohlzylindrischen Abschnitt 11 des Stators greift der Endteil 12 des Rotors 2 ein und ist über zwei Lager 13 in diesem drehbar. In diesem Rotor 2 ist die Linse H2 in einem aus Fig. 1 entnehmbaren Abstand zur Linse H1 angeordnet und durch einen Ring 14 festgelegt, der in der gleichen Weise wie der Ring 10 ausgebildet sein kann. Im weiteren hohlzylindrischen Teil des Rotors 2 sind die Empfängereinheiten E1, E2, E3 in Form von Lichtwellenleitern b', a', c' in der optischen Achse der Vorrichtung unter Einhaltung der axialen Zwischenabstände Δa, Δb angeordnet und durch Ringe 15, 16 sowie radiale Haltestege 17, 18 festgelegt.

Die Arbeitsweise der dargestellten Vorrichtung ist folgende:

Die von den Sendereinheiten S1, S2, S3 ausgehenden Lichtsignale werden in der in Fig. 1 dargestellten Weise von den beiden Linsen derart gesammelt, daß die Lichtstrahlen der äußersten linken Sendereinheit S1 mit nahezu gleicher Intensität von der der zweiten Linse H2 nächstliegenden Empfängereinheit E1 empfangen werden können. Entsprechendes gilt z. B. auch für die Sendereinheit S2, deren Strahlen vom Linsensystem H1, H2 so geführt werden, daß sie von der mittleren Empfängereinheit E2 ohne merkbaren Energieverlust aufgenommen werden können. Damit haben alle Strahlengänge zwischen den jeweils zugeordneten Sender-und Empfängereinheiten die gleiche Länge. Die durch die Positionierung der jeweils inneren Sendereinheiten S2 bzw. S3 im Strahlengang der nächstäußeren Sendereinheit hervorgerufenen Verluste sind praktisch vernachlässigbar.

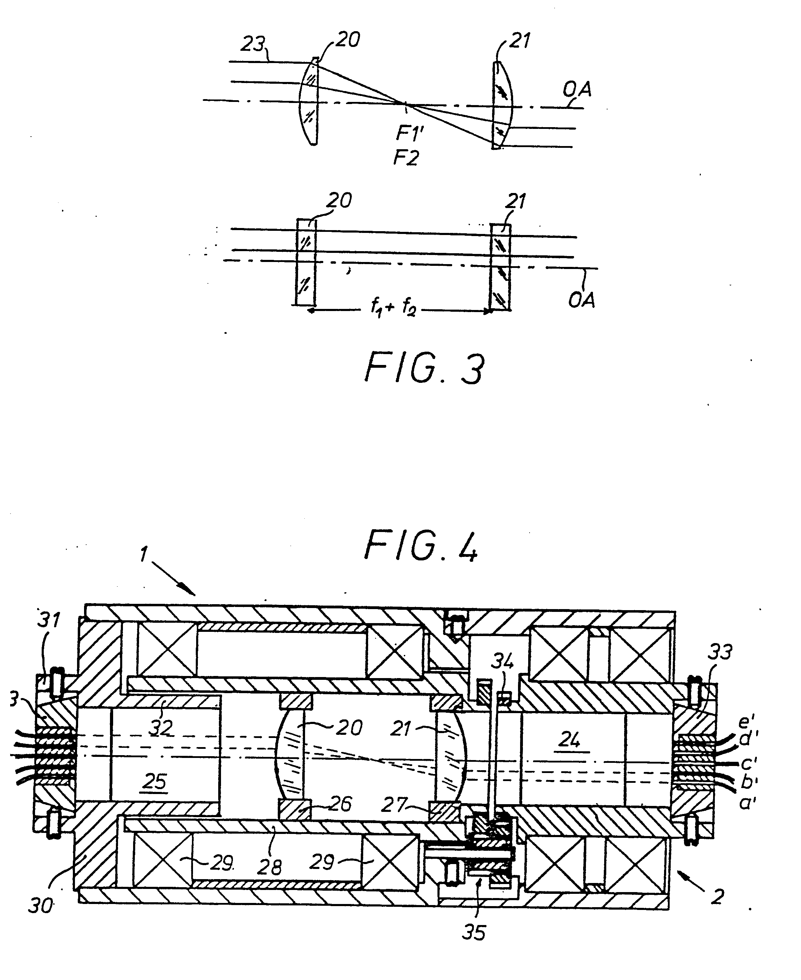

Bei der in den Fig. 3, 4 dargestellten Lösung weist das optische System ebenfalls zwei Sammellinsen 20, 21 auf, die jedoch die Form von Zylindersegmenten mit gegeneinander weisenden Planflächen und jeweils nach außen weisenden Zylinderflächen haben. Die Form dieser Zylinderlinsen ist insbesondere aus Fig. 3 ersichtlich, die einen Schnitt durch die beiden Linsen 20, 21 in der Horizontalebene und darunter in der Vertikalebene -jeweils mit in Vollinien dargestelltem Strahlenbündel 23 -zeigt. Wie im oberen Horizontalschnitt in Fig. 3 dargestellt, fallen die beiden inneren Brennpunkte F1', F2 der beiden Zylinderlinsen 20, 21 in der Mittelebene zusammen, wobei der radiale Abstand der einzelnen Lichtstrahlen zur optischen Achse OA nach Durchgang durch die beiden Zylinderlinsen 20, 21 mit umgekehrten Vorzeichen erhalten bleibt.

Die in Fig. 4 dargestellte Vorrichtung enthält einen Stator 1 und einen Rotor 2 sowie ein optisches System mit zwei Objektiven 25, 24 und den beiden Zylinderlinsen 20, 21 gemäß Fig. 3. Beide Zylinderlinsen 20, 21 sind über je einen Ring 26, 27 in einem Rohrstück 28 befestigt, das über Lager 29 im Innenraum des hohlzylindrischen Stators 1 drehbar angeordnet ist. Das in Fig. 4 linke Stirnende des Stators 1 ist durch einen Deckel 30 mit einem äußeren Ringflansch 31 und einem inneren Ringansatz 32 verschlossen. Innerhalb des äußeren Ringflansches 31 ist eine Anschlußbuchse 33 für mehrere Lichtwellenleiter -im vorliegenden Fall für fünf Lichtwellenleiter a-e -lösbar montiert. Im Innenraum des nach innen weisenden Ringansatzes 32 sitzt das Objektiv 25. Eine entsprechende Anschlußbuchse 33 ist am vorstehenden Ende des hohlzylindrischen Rotors 2 vorgesehen und weist eine entsprechende Anzahl an Lichtwellenleitern a' bis e' auf. Am in Fig. 4 linken Ende des Rotors 2 sitzt ein Zahnkranz 34, der ein Bauteil eines Untersetzungsgetriebes 35 ist. Die Ausgangsseite des Untersetzungsgetriebes 35 ist mit dem Rohrstück 28 antriebsmäßig gekoppelt, wobei das -im vorliegenden Fall als Stirnradgetriebe -ausgelegte Untersetzungsgetriebe 35 das Rohrstück 28 und damit die darin befestigten Zylinderlinsen 20, 21 mit der halben Drehzahl des Rotors 2 antreibt. Durch diese im Verhältnis 1 : 2 zur Rotordrehzahl untersetzte Drehbewegung der in der dargestellten Weise angeordneten Zylinderlinsen 20, 21 wird eine Mehrkanal-Übertragung von Lichtsignalen erreicht, bei denen die eingangs-und ausgangsseitigen Lichtwellenleiter außermittig zur optischen Achse angeordnet sein können.

Die Erfindung ist nicht auf die dargestellten Ausführungen beschränkt. Vielmehr können auch Abwandlungen in der konstruktiven Ausbildung vorgenommen werden, und zwar beispielsweise hinsichtlich der axialen Abstände der Sender-bzw. Empfängereinheiten untereinander. Ferner können bei der Lösung nach Fig. 1 und 2 auch beide Sammellinsen H1 und H2 bzw. entsprechend ausgebildete Objektive in den vorgegebenen Bildpunktabständen ortsfest im Stator oder auch beide umlaufend im Rotor angeordnet werden, was eine konstruktive Vereinfachung ermöglicht.

**Ansprüche**

1. Vorrichtung zur Übertragung von Lichtsignalen zwischen zwei Bauteilen, von denen mindestens eines um die gemeinsame Achse rotiert, bestehend

-aus einem Stator,

-aus einem mit dem rotierenden Bauteil gekuppelten Rotor,

-aus jeweils mehreren Lichtwellenleiter-Anschlüssen im Stator und im Rotor und

- aus einem zentral angeordneten optischen System,

**dadurch gekennzeichnet,**

daß das optische System zwei gleichachsig und mit einem der Summe der Brennweiten (f1 + f2) entsprechenden Zwischenabstand angeordnete Sammellinsen (H1, H2) enthält und

daß die Enden der Lichtwellenleiter (a, b, c) auf der Sender-und der Empfängerseite im Stator (1) bzw. im Rotor (2) in der optischen Achse in vorgegebenen axialen Bildpunktabständen ( $\Delta a$; $\Delta a'$; $\Delta b$; $\Delta b'$) festgelegt sind.

2. Vorrichtung nach Anspruch 1,

dadurch gekennzeichnet,

daß eine Sammellinse (H1) im Stator (1) und die andere Sammellinse (H2) im hohlzylindrischen Rotor (2) angeordnet ist.

3. Vorrichtung nach Anspruch 1 oder 2,

dadurch gekennzeichnet,

daß die Enden eines der Lichtwellenleiter-Paare (b, b') im Bereich der äußeren Brennpunkte (FI, F2') der Sammellinsen (H1, H2) angeordnet sind und die Bemessungsgrundlage für die Bildpunkt-Abstände ($\Delta a$, $\Delta a'$; $\Delta b$,$\Delta b'$) bilden, in denen die Enden der weiteren Lichtwellenleiter-Paare (a, a' und c, c') angeordnet sind.

4. Vorrichtung nach einem der Ansprüche 1 bis 3,

dadurch gekennzeichnet,

daß die Brennweiten (f1, f2) der Sammellinsen (H1, H2) und damit auch die Bildpunktabstände ( $\Delta a$,$\Delta a'$ bzw. $\Delta b$, $\Delta b'$) auf der Sender-und der Empfängerseite untereinander gleich sind.

5. Vorrichtung nach einem der Ansprüche 1 bis 3,

dadurch gekennzeichnet,

daß die Sammellinsen (H1, H2) unterschiedliche Brennweiten (f1, f2) haben.

6. Vorrichtung nach dem Oberbegriff des Anspruchs 1, wobei der äußeren Brennpunkt-Ebenen des optischen Systems etwa in den Ebenen der Enden der Lichtwellenleiter liegen,

**dadurch gekennzeichnet,**

daß das optische System zwei Zylinderlinsen (20, 21) enthält, die mit ihren Planflächen achsparallel zueinander ausgerichtet quer zur optischen Achse in einem der Summe ihrer Brennweiten (f1, f2) entsprechenden Abstand angeordnet und gemeinsam mit der halben Rotordrehzahl angetrieben sind.

7. Vorrichtung nach Anspruch 6,

dadurch gekennzeichnet,

daß die Anschlüsse der verschiedenen Lichtwellenleiter (a-e) mit unterschiedlichen radialen Abständen um die optische Achse (OA) angeordnet sind.

8. Vorrichtung nach Anspruch 6 oder 7,

dadurch gekennzeichnet,

daß die beiden Zylinderlinsen (20, 21) gleiche Form haben.

FIG. 1

FIG. 2

0 215 973

FIG. 3

FIG. 4

## EUROPÄISCHER RECHERCHENBERICHT

Nummer der Anmeldung

EP 85 11 2121

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 178 515 (A. TARASEVICH)<br>* Ansprüche 1, 2, Spalte 3, Zeilen 15-21, Spalte 4, Zeilen 17-22 * | 1 | G 02 B 6/36 |
| | --- | | |
| D,A | DE-C-3 249 621 (SPINNER GMBH)<br>* Figuren * | 1 | |
| | --- | | |
| A | EP-A-0 035 054 (LICENTIA)<br>* Figur 1 * | 2 | |
| | --- | | |
| A | FR-A-2 529 350 (CHEVRON RESEARCH CO.)<br>* Ansprüche 3, 4, 7, Figur 2 * | 6 | |
| | --- | | |
| A | EP-A-0 111 390 (SPERRY CORP.)<br>* Figur 4, Zusammenfassung * | 6 | RECHERCHIERTE SACHGEBIETE (Int. Cl.4)<br><br>G 02 B 6/36 |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 04-06-1986 | FUCHS R |